# FASCICULE DE BREVET EUROPEEN

(11) **EP 0 739 959 B1**
(45) Date de publication et mention de la délivrance du brevet: **02.10.2002**
(21) Numéro de dépôt: 96400866.8
(22) Date de dépôt: 24.04.1996
(51) Int. Cl.: C09D 11/00, C09D 11/16

(54) **Composition d'encre à base d'eau pour le marquage de tous supports**
Wässrige Tintezusammensetzung zur Markierung aller Substrate
Water-borne ink composition for marking all substrates

(30) Priorité: 26.04.1995 FR 9504990
(43) Date de publication de la demande: 30.10.1996
(73) Titulaire: IMAJE S.A., 26500 Bourg les Valence (FR)
(72) Inventeur: Heraud, Alain, 26000 Valence (FR); de Saint-Romain, Pierre, 26000 Valence (FR)
(74) Mandataire: Dubois-Chabert, Guy

(56) Documents cités:
- EP-A- 0 048 094
- GB-A- 2 225 788
- US-A- 3 903 034

## Description

L'invention concerne une composition d'encre pour le marquage de tous supports poreux ou non poreux, tels que les papiers, les cartons, le verre, les plastiques, les métaux ou toute autre surface poreuse ou non poreuse, qui est particulièrement bien adaptée au marquage par jet d'encre de la plus grande variété de supports.

L'impression par jet d'encre est une technique bien connue, qui permet l'impression, le marquage, ou la décoration de toutes sortes d'objets, à grande vitesse, et sans contact de ces objets avec le dispositif d'impression, de messages variables à volonté tels que codes barres, dates limites de vente etc. et ce même sur des supports non plans.

Les systèmes d'impression par jet d'encre se divisent en deux grands types : "goutte à la demande" (Drop on demand, DOD) ou "jet continu" (CJ). Les ingrédients qui composent les encres pour ces systèmes d'impression sont des produits organiques, des colorants ou des pigments, des résines, dans des solvants plus ou moins volatils ou dans l'eau, d'autres additifs peuvent être incorporés tels que ceux qui sont nécessaires pour communiquer à l'encre la conductivité requise à la déviation électrostatique dans la technique du jet continu.

Les compositions d'encre applicables par les techniques de "goutte à la demande", à savoir d'une part par des systèmes de type piézoélectrique utilisant la déformation d'une céramique piézoélectrique sous l'effet d'une tension électrique pour aspirer et projeter l'encre, d'autre part par des systèmes "jet à bulle", sont pour la plupart à base d'eau. En effet, l'utilisation de l'eau permet de mettre en oeuvre les colorants solubles à l'eau qui sont les plus répandus. D'autres raisons de l'utilisation de l'eau comme milieu solvant de ces encres sont son prix, son absence de toxicité ainsi que sa faible volatilité. La faiblesse inhérente de toutes ces encres à base d'eau est la sensibilité à l'eau des marquages obtenus. On a donc cherché à améliorer les résistances à l'eau des encres utilisées dans la technique dite de "goutte à la demande" en mettant en oeuvre des colorants spécifiques et des combinaisons particulières.

Ainsi, le document FR-A-2 305 479 décrit une encre pour imprimante à jet d'encre à base d'eau dans laquelle le colorant est dissous dans un solvant non miscible à l'eau avec addition d'un agent complexant comprenant un sel d'acide gras à longue chaîne et un agent mouillant (arylsulfonate de sodium) moyennant quoi une phase unique est obtenue. L'encre séchée est insensible à l'eau selon le .test du frottement humide.

Du fait que les encres utilisées dans les systèmes du type "goutte à la demande" doivent présenter une faible vitesse d'évaporation pour éviter le colmatage des buses, leur application est en fait limitée aux supports poreux dans lesquels l'encre pénètre et peut sécher par absorption, ce qui n'est pas le cas des surfaces non poreuses. Le marquage sur des supports non poreux serait effaçable trop facilement, au moindre frottement au doigt.

Les systèmes d'impression du type à "jet continu" mettent en oeuvre rarement des encres à base d'eau, car cette technologie se prête mieux aux marquages à très grande vitesse pour lesquels une grande vitesse d'évaporation est nécessaire. Ces encres sont donc en grande majorité des encres à base de solvants organiques : alcools et cétones en particulier. Les encres mises en oeuvre dans les systèmes à jet continu présentent une bonne tenue sur toutes sortes de supports à marquer non poreux.

De façon classique, ce type d'encre contient :
- un solvant ou un mélange de-solvants, le solvant majoritaire étant très volatil et peu visqueux : tel que les alcools, cétones et esters de faible masse moléculaire qui permettent d'ajuster la viscosité à une valeur de 2 à 10 mPa.s.

Des solvants minoritaires plus visqueux et moins volatils tels que les éthers de glycol peuvent être ajoutés pour améliorer le séchage de l'encre sur le support, de l'eau peut parfois être ajoutée à ces formulations mais toujours en faibles proportions, en tout cas, jamais en tant que solvant principal et en quantité majoritaire ;
- un ou plusieurs liants aussi, appelés résines, car ils sont la plupart du temps solides et polymériques, qui permettent d'assurer l'adhérence de l'encre sur les supports visés, en particulier sur les supports non poreux. La nature de ces liants, spécifique à chaque catégorie de support, apporte de plus à l'encre l'essentiel de ses propriétés de résistance aux agressions physiques et/ou chimiques ;
- un ou plusieurs colorants et/ou pigments pour donner à l'encre sa couleur, ou bien encore des propriétés optiques particulières telles que la fluorescence ;
- éventuellement un sel "de conductivité"

En ce qui concerne les encres dont le solvant principal est l'eau, il existe également certaines encres projetables par jet qui sont à base d'eau.

Il est souhaitable de formuler des encres pour impression par jet d'encre comprenant de l'eau comme solvant majoritaire ; en effet, l'utilisation des solvants organiques pose des problèmes de toxicité et d'inflammabilité.

De plus, l'utilisation de solvants organiques est une source de nuisances pour l'environnement, car après que l'encre ait été appliquée sur le support, le solvant s'évapore et libère des composés volatils dans l'atmosphère. Les composés organiques volatils sont soumis à des réglementations de plus en plus restrictives allant même jusqu'à leur interdiction, comme c'est le cas notamment des solvants chlorés.

Ainsi, le brevet EP-A-0 466 345 décrit-il une encre pour impression par jet d'encre à faible teneur en solvants volatils qui comprend une dispersion ou émulsion aqueuse d'une résine présentant une taille de particules de 0,01 à 1 µm. Cette résine est une résine de type polyester, styrène-acrylique, polyuréthane aromatique ou aliphatique, alkyde, époxy, vinylique, phénolique.

Le colorant est un colorant soluble ou une dispersion de pigment : en particulier le noir de carbone. Les encres obtenues donnent des marquages ayant une bonne résistance à l'eau et aux solvants, même sans durcissement ultérieur sur des supports non poreux.

Le document de brevet US-A-4 365 035 est relatif à une composition d'encre aqueuse pour impression par jet d'encre qui comprend une dispersion aqueuse d'un pigment blanc d'une taille de particule inférieure à 5 µm (micromètres) ; et d'un liant qui est une résine acrylique.

Le compte-rendu de recherche "RESEARCH DISCLOSURE, Décembre 1980, page 540, abstract n° 20033, Havant. Hampshire GB" décrit une encre aqueuse pour impression par jet d'encre contenant une dispersion de noir de carbone, une résine acrylique en dispersion et du polyéthylène glycol pour empêcher les dépôts d'encre et le colmatage. Le document EP-A-0 286 219 est relatif à une composition d'encre opaque sans pigment, pour impression par jet d'encre qui comprend des microsphères creuses en un polymère quelconque d'un diamètre extérieur compris entre 0,4 et 1 µm (micron) et qui permet d'obtenir des marquages adhérant sur des supports poreux et non poreux sans les problèmes de colmatage et de sédimentation observés généralement avec les pigments denses. Le liant se présente sous la forme d'une émulsion ou dispersion de résine en particulier de résine styrène-acrylique.

Le document US-A-4 136 076 est relatif à une composition d'encre aqueuse pour impression par jet ayant une excellente résistance qui comprend en tant que liant des polymères ou copolymères acryliques solubilisés qui sont réticulés lors du séchage par un ion métallique tel que le zinc.

Il ressort de ce qui précède qu'il est connu de formuler des encres pour jet d'encre en combinant en phase aqueuse :
- des colorants solubles ou des pigments en dispersions tels que le noir de carbone,
- des résines en dispersion, c'est-à-dire sous la forme de particules sphériques de diamètre de l'ordre de 0,1 µm (micron) appelés aussi polymères "en émulsion"
- avec peu de solvants organiques.

Il est aussi connu que l'on peut aussi formuler des encres avec des résines en solution aqueuse, comme on le fait en solvant organique.

L'utilisation de pigment mis en dispersion, voire même sous forme de microémulsion, est aussi connue depuis longtemps.

On se trouve en présence de deux grandes catégories de liants : d'une part, les polymères hydrosolubles, de l'autre les polymères en dispersion.

Les polymères hydrosolubles ont l'avantage de permettre une solubilisation de l'encre séchée dans les différents éléments du circuit hydraulique des imprimantes : en particulier des imprimantes à jet continu ; en effet, dans de telles imprimantes, l'encre sort sous pression d'un très petit orifice, elle se sépare en gouttelettes qui sont soit chargées électriquement et déviées pour l'impression, soit non chargées et récupérées dans une gouttière par aspiration, puis recyclées dans le circuit d'encre. Après l'arrêt de l'imprimante, il reste inévitablement de l'encre non utilisée pour l'impression dans les tuyaux de récupération et cette encre sèche pendant les périodes de repos. Les encres aqueuses contenant un polymère hydrosoluble comme liant permettent donc à l'instar des encres à solvant une dissolution facile de l'encre séchée dans le circuit d'encre de l'imprimante tout en ne présentant pas les inconvénients mentionnés ci-dessus liés à l'emploi d'un solvant organique volatil, toutefois ces polymères hydrosolubles présentent le désavantage majeur de rester solubles ou très solubles à l'eau après leur séchage, en particulier sur des supports non poreux.

Les encres aqueuses qui contiennent des polymères en dispersion comme liants ont des propriétés mécaniques très supérieures à celles des liants solubles, ils confèrent au film d'encre après séchage, au contraire des liants hydrosolubles, une résistance élevée à l'humidité. Cependant, si l'encre est appliquée au moyen d'une imprimante à jet continu dévié, et au contraire des encres contenant des liants polymères hydrosolubles, elle n'est plus soluble une fois sèche et lors du redémarrage de l'imprimante, elle ne peut plus être dissoute ou alors seulement dans des solvants organiques puissants.

Le document EP-A-0 048 094 décrit des homopolymères et des copolymères de l'acrylamide comprenant un groupe hydrophobe terminal. Un exemple de ce document décrit la mise en oeuvre de ces polymères en tant que dispersant pour pigment dans des compositions d'encre pour l'impression par jet d'encre.

La composition d'encre, outre cette résine en dispersion, comprend, en tant que liant, une autre émulsion acrylique. La composition d'encre selon ce document ne comprend absolument pas de résine soluble dans l'eau.

De manière à surmonter cet inconvénient des encres contenant comme liant des résines en dispersion, il a été proposé dans le rapport de recherche mentionné ci-dessus d'ajouter un polyéthylène glycol qui absorbe l'eau de l'atmosphère et maintient humides les orifices de projection. Cette encre, utilisée dans une formulation pour jet continu donne des marquages présentant de nouveau une extrême sensibilité à l'eau.

L'objet de cette invention est donc de permettre le marquage rapide, pour tirer notamment profit du maximum de la capacité d'impression des imprimantes à jet d'encre, d'objets dont la surface est poreuse tels que les papiers et cartons, mais aussi d'objets dont la surface n'est pas poreuse, tels que les plastiques, le verre, les métaux. L'objet de l'invention est également de permettre un marquage présentant une grande résistance à l'humidité, en particulier sur les surfaces non poreuses, à l'aide d'une encre à base d'eau ayant la plus faible teneur possible en composés organiques volatils, afin de satisfaire aux exigences de toxicité, d'inflammabilité, et de protection de l'environnement. L'invention a encore pour objet une encre aqueuse qui présente également une bonne adhérence et une bonne résistance aux agressions chimiques. L'ensemble de ces propriétés doit être obtenu sans que ne soient affectées les propriétés habituellement requises des encres pour les imprimantes à jet d'encre, et en particulier pour les imprimantes utilisant la technique du jet continu : viscosité, résistivité etc. L'encre doit de plus, pour permettre le marquage à grande vitesse, présenter une vitesse de séchage aussi grande que possible. Enfin, l'invention a également pour objet une encre aqueuse qui peut être facilement dissoute après avoir séché dans le circuit d'encre des imprimantes sans avoir recours comme pour les encres comportant des polymères en dispersion, à des solvants agressifs susceptibles de détériorer les différents éléments du circuit hydraulique des imprimantes.

Cet objectif et d'autres encore, sont réalisés, conformément à l'invention par une composition d'encre selon la Rev. 1.

La composition d'encre peut comprendre éventuellement un solvant organique ayant une fonction d'agent de coalescence, c'est-à-dire permettant la bonne formation du film d'encre par ramollissement des particules de polymère en dispersion.

Du fait que l'encre utilise comme liant des polymères en dispersion, les encres possèdent des propriétés mécaniques intéressantes et en tout cas bien supérieures à celles des encres incluant uniquement des liants solubles , une bonne adhérence sur tous supports même non poreux, des tenues comme la tenue au frottement humide remarquables. Grâce à la combinaison d'un polymère non soluble en dispersion, avec un polymère soluble, l'encre séchée dans les différents éléments de l'imprimante peut être de plus facilement resolubilisée sans mettre en oeuvre des solvants agressifs. L'utilisation dans les encres selon l'invention de dispersion de pigments tels que le noir de carbone permet d'améliorer encore leur sensibilité à l'eau après séchage par comparaison avec des encres utilisant des colorants solubles dans l'eau qui influencent très fortement la résistance à l'eau de l'encre déposée. La lisibilité "code barre" des marquages obtenus est remarquable et supérieure à toutes les encres connues. Enfin, cette encre est une encre à base d'eau avec tous les avantages de coût, de toxicité, de tolérance pour l'environnement qui en découlent.

Le polymère en dispersion pourra être choisi parmi les polymères acryliques et méthacryliques et les copolymères acryliques et méthacryliques entre eux ou avec d'autres monomères éthyléniquement insaturés notamment le styrène, les méthacrylates et acrylates, les polymères vinyliques et copolymères, les polyesters, les polyuréthannes aliphatiques et aromatiques, les résines alkydes et époxy.... Afin d'ajuster correctement à la fois la température de formation du film et ses propriétés mécaniques, on utilise des combinaisons de plusieurs types de résines en dispersion qui diffèrent par leur température de transition vitreuse (Tg) et leur dureté. Une des résines ou polymère en dispersion aura une température de transition vitreuse inférieure à 0°C, et l'un des polymères en dispersion aura une température de transition vitreuse supérieure ou égale à 50°C.

Il est évident que par dispersion on entend aussi "microémulsion" ; en effet, la distinction souvent faite entre "dispersion" et "microémulsion" n'est qu'une affaire de taille des particules.

Les colorants et/ou pigments et leurs combinaisons peuvent être choisis de manière à obtenir la nuance de couleur désirée.

Les colorants sont par exemple ceux qui sont répertoriés par le "Colour Index Guide" dans la catégorie des "Pigment dyes" ou colorants pigments, ou encore dans la catégorie des "Disperse Dyes" ou colorants dispersés. Du fait que l'utilisation de colorants solubles dans l'eau influence très fortement la sensibilité à l'eau de l'encre déposée, même après séchage, il est intéressant d'utiliser les dispersions de pigments en particulier de noir de carbone ou les dispersions de bleu de phtalocyanine pour obtenir une insensibilité à l'eau après séchage. La quantité de colorant et/ou de pigment sera de préférence de 0,1 à 15 % et encore mieux de 2 à 10% en masse.

Le polymère soluble est le second élément constitutif essentiel des encres selon l'invention qui permet la solubilisation de l'encre séchée dans l'imprimante. De préférence, ce polymère est préparé à partir d'une résine polymère insoluble dans l'eau (polymère solubilisable) et rendue soluble dans l'eau par neutralisation. Ce polymère pour ne pas perdre ses propriétés de résistance à l'eau devra de préférence aussi être insensible à l'eau après séchage. On utilisera donc de préférence un polymère solubilisé par neutralisation avec un produit volatil.

Par exemple, le polymère solubilisable sera choisi parmi les polymères acryliques et méthacryliques, et les copolymères acryliques et méthacryliques, entre eux ou avec d'autres monomères éthyléniquement insaturés, en particulier le styrène, les méthacrylates et acrylates, les polyesters, les polyuréthanes aromatique ou aliphatiques, les polymères et copolymères vinyliques, les silicones, les polyoléfines chlorés, les résines alkyles, les résines époxy, la colophane et ses dérivés.

Dans le cas le plus courant, ces polymères sont porteurs de fonctions carboxyles tels qu'ils présentent par exemple un indice d'acide compris entre 40 et 350, les polymères sont rendus hydrosolubles par neutralisation d'au moins une partie des fonctions carboxyles avec une base.

Les bases préférées sont l'ammoniaque, et toutes les amines primaires, secondaires et tertiaires , notamment, la diméthyléthanolamine, la triéthanolamine ou l'amino-2-méthyl-2-propanol-1.

Le rapport massique entre les polymères en émulsion et ceux en solution peut varier entre de larges limites, il est fonction en particulier de l'équipement de projection par jet auquel l'encre est destinée et peut être optimisé pour cet équipement de projection. Ce rapport détermine à la fois, la resolubilité de l'encre après un temps donné, et les propriétés mécaniques et de résistance à l'eau. Comme les dispersions contiennent un pourcentage connu de matière solide et donné par le fournisseur, ce rapport massique est exprimé en matière sèche sur matière sèche. On a pu déterminer que ce rapport de la résine solubilisable à la résine en dispersion est de préférence compris entre 0,25 et 4. Avec un rapport inférieur à 0,25, la tenue du marquage à l'eau est excellente, mais la resolubilité peut être considérée comme étant insuffisante pour permettre un fonctionnement sans défaut en imprimante. Avec un rapport supérieur à 4, la resolubilité est parfaite et le fonctionnement en imprimante est excellent, mais la tenue mécanique du marquage (tenue au frottement sec et humide, souplesse) n'est pas aussi bonne.

Le choix de tous ces ingrédients et en particulier des résines formant le liant est, de façon générale dicté par leur solubilité dans le milieu et leur compatibilité entre eux. Les quantités à utiliser dans la composition globale d'encre sont conditionnées en premier lieu par la viscosité et éventuellement la conductivité à obtenir pour être applicable par exemple par jet.

La viscosité sera donc de préférence comprise entre 2 et 10 mPa.s sur l'ensemble de la gamme de température de fonctionnement des imprimantes et les quantités des ingrédients pourront être facilement déterminées par l'homme du métier de manière à obtenir une viscosité adéquate. Une composition d'encre préférée selon l'invention comprendra, les pourcentages étant des pourcentages en masse : de 0,1 à 30 % de résine polymère en dispersion, de 0,1 à 30 % de résine soluble, de 0,1 à 15 % de colorant et/ou de pigment, et le complément à 100 % de solvant.

Il est également évident que d'autres résines en plus des résines ci-dessus peuvent être incorporées dans la composition d'encre selon l'invention pour en améliorer certaines propriétés.

Lorsque l'encre doit être applicable par jet continu, elle doit avoir une conductivité électrique suffisante de préférence de l'ordre de 500 à 2000 µS/cm ou plus.

Les produits apportant à l'encre la conductivité nécessaire à la projection par jet continu sont des composés ionisables tels que les sels de métaux alcalins, alcalino-terreux ou d'ammonium simple ou quaternaire, sous forme d'halogénures, de perchlorates, de nitrates, thiocyanates, acétates, sulfates, propionates, etc. Les produits seront donc présents si nécessaire dans la composition d'encre de manière à communiquer à l'encre la conductivité ci-dessus.

Une autre difficulté à surmonter dans ce genre de compositions est la formation de mousse. La composition selon l'invention pourra donc éventuellement comprendre un antimousse dans une quantité de préférence de 0,05 à 20 % en masse. Il existe de nombreux produits ayant une activité antimousse : notamment des solvants simples comme l'isopropanol ou le 2-éthylhexanol ou le 2-butanol ou bien encore des silicones, des polyols oxyacétyléniques, ou des solvants organiques de haut point d'ébullition tels que le butoxy-éthanol.

Le milieu aqueux est propice à la prolifération de micro-organismes ; il sera donc de préférence nécessaire d'ajouter des biocides : bactéricides, fongicides dans les encres aqueuses selon l'invention. Ces biocides : bactéricides, fongicides seront de préférence présents dans une quantité de 0,05 à 5 % en masse.

Comme mentionné ci-dessus, l'encre peut éventuellement comprendre un solvant organique, dans une proportion n'excédant pas de préférence 5 % en masse. Ce solvant organique a une fonction essentiellement d'agent de coalescence, c'est-à-dire qu'il permet la bonne formation du film d'encre par le ramollissement notamment des particules de polymère en dispersion. Ce solvant peut être choisi parmi les éthers de glycols, en particulier éthylène ou propylène-glycol et leurs esters.

L'invention a également pour objet un procédé de marquage d'objets, poreux ou non poreux par projection sur des objets d'une composition d'encre telle qu'elle a été décrite ci-dessus. Le marquage peut notamment s'effectuer par la technique du jet continu.

L'invention a encore pour objet un substrat ou support, poreux ou non poreux pourvu d'un marquage comprenant la composition d'encre telle que décrite ci-dessus. Ce substrat peut être en métal, par exemple en aluminium, en acier (boîtes de boissons), en verre (bouteilles de verre), en bois, en céramique, en papier, en carton, en polymère synthétique (" plastiques ") tels que PVC, PET, en polyoléfine telles que polyéthylène (PE), polypropylène (PP), en " Plexiglas ", ou en toute autre substance non poreuse ou poreuse.

L'invention sera mieux comprise à la lecture de la description suivante de modes de réalisation de l'invention donnés à titre d'exemples illustratifs et non limitatifs.

Les compositions d'encre suivantes comportant différents types de liant ont été préparées en mélangeant les produits cités dans le tableau 1 ci-dessous.

**TABLEAU 1**

| EXEMPLE N° | 1* | 2* | 3* | 4* | 5 |
|---|---|---|---|---|---|
| Dispersion de noir de carbone à 30 % de noir | 18 | 18 | 18 | 18 | 18 |
| Dispersion acrylique de Tg-23°C et à 45 % d'extrait sec | 20 | 10 | 16 | | 8 |
| Dispersion acrylique de Tg 50°C et à 50 % d'extrait sec | | | | | 8 |
| Dispersion de polyuréthanne à 34 % d'extrait sec | | | | 28 | |
| Résine acrylique d'indice d'acide 250 | | | | 8 | 8 |
| Résine styrène-acrylique d'indice d'acide 250 | 5 | 10 | 8 | | |
| Ammoniaque (à 28 % de NH₃) | 5 | 5 | 5 | 5 | 5 |
| Eau déminéralisée | 51,7 | 56,7 | 52,7 | 44,7 | 52,7 |
| Antimousse | 0,2 | 0,2 | 0,2 | 0,2 | 0,2 |
| Biocide | 0,1 | 0,1 | 0,1 | 0,1 | 0,1 |
| Rapport résine solubilisable/dispersion | 0,5 | 2 | 1 | 1 | 1 |
| Viscosité (mPa.s) | 5,3 | 4,3 | 4,9 | 6,5 | 5,5 |
| Conductivité (mS/cm) | >5 | >5 | >5 | >5 | >5 |
| Tous les pourcentages sont des pourcentages en masse, sauf indication contraire, la viscosité est exprimée en mPa.s et la conductivité en mS/cm. | | | | | |

| | | | | | |
|---|---|---|---|---|---|
| * exemple comparatif | | | | | |

Les encres ainsi préparées ont été testées dans des imprimantes à jet continu dévié et permettent d'obtenir des impressions d'excellente qualité. Les marquages obtenus avec l'exemple 1 sont les plus résistants à l'eau, et ceux de l'exemple 2 offrent un excellent résultat en fonctionnement dans une imprimante. Les exemples 3, 4 et 5 offrent un bon compromis entre la tenue à l'eau et la machinabilité. L'exemple 4 donne des marquages plus adaptés à des supports souples que ceux de l'exemple 5 qui résistent mieux à des hautes températures.

Les compositions d'encre suivantes comportant différents types d'amines de neutralisation ont été préparées en mélangeant les produits cités dans le tableau 2 ci-dessous.

**TABLEAU 2**

| EXEMPLE N° | 6* | 7* | 8* | 9* |
|---|---|---|---|---|
| Dispersion de noir de carbone | 18 | 18 | 18 | 18 |
| Dispersion acrylique de Tg 23°C et à 45% d'extrait sec | 14 | 14 | 14 | 14 |
| Résine styrène-acrylique d'indice d'acide 250 | 7 | 7 | 7 | 7 |
| Eau déminéralisée | 55,7 | 55,7 | 55,7 | 55,7 |
| Ammoniaque (à 28 % de NH₃) | 5 | | | |
| Diméthyl-éthanolamine | | 5 | | |
| Triéthanolamine | | | 5 | |
| Amino-2-méthyl-2-propanol | | | | 5 |
| Antimousse | 0,2 | 0,2 | 0,2 | 0,2 |
| Biocide | 0,1 | 0,1 | 0,1 | 0,1 |
| Viscosité (mPa.s) | 4,0 | 4,3 | 4,6 | 5,1 |
| Conductivité (ms/cm) | >5 | >5 | >5 | >5 |
| Tous les pourcentages sont des pourcentages en masse, sauf indication contraire, la viscosité est exprimée en mPa.s et la conductivité en mS/cm. | | | | |

| | | | | |
|---|---|---|---|---|
| * exemple Comparatit | | | | |

Les encres ainsi préparées ont été testées dans des imprimantes à jet continu dévié et permettent d'obtenir des impressions d'excellente qualité. Toutes présentent la même résistance à l'eau après séchage. Cependant, le séchage complet est obtenu plus rapidement avec l'ammoniaque qu'avec les autres bases, la plus lente étant l'amino-2-méthyl-2-propanol.

D'autres compositions d'encres (exemples 10 à 14) comportant différents types de pigments et d'antimousse ont été préparées en mélangeant les produits cités dans le tableau 3 ci-dessous.

**TABLEAU 3**

| EXEMPLE N° | 10* | 11* | 12* | 13* | 14* |
|---|---|---|---|---|---|
| Dispersion de noir de carbone | | 18 | 18 | 18 | 18 |
| Dispersion de bleu de phalocyanine | 15 | | | | |
| Dispersion acrylique de Tg 50°C et à 50 % d'extrait sec | 16 | 16 | 16 | 16 | 14 |
| Résine acrylique d'indice d'acide 250 | 8 | 8 | 8 | 8 | 7 |
| Eau déminéralisée | 60,7 | 57,5 | 57,7 | 57,7 | 56 |
| Antimousse de type diol acétylénique | | 0,4 | | | |
| Antimousse de type silicone | 0,2 | | 0,2 | | |
| 2 éthyl hexanol | | | | 2 | |
| 2-butanol | | | | | 5 |
| Biocide | 0,1 | 0,1 | 0,1 | 0,1 | |
| Viscosité (mPa.s) | 4,7 | 4,2 | 4,2 | 4,6 | 5,2 |
| Conductivité (ms.cm) | >5 | >5 | >5 | >5 | >4 |
| Tous les pourcentages sont des pourcentages en masse, sauf indication contraire, la viscosité est exprimée en mPa.s et la conductivité en mS/cm. | | | | | |

| | | | | | |
|---|---|---|---|---|---|
| * exemple comparatif | | | | | |

Les encres ainsi préparées ont été testées dans des imprimantes à jet continu dévié et permettent d'obtenir des impressions d'excellente qualité sans variation de la capacité au mouillage de ces encres sur des supports tels que le polyéthylène, le PET ou le PVC.

## Revendications

1. Composition d'encre pour le marquage d'objets comprenant au moins :
- un liant,
- un pigment et/ou un colorant,
- un solvant comprenant essentiellement de l'eau,
**caractérisée en ce que** le liant comprend la combinaison a) d'un constituant en dispersion comprenant la combinaison d'une résine ou polymère en dispersion ayant une température de transition vitreuse (Tg) inférieure à 0°C et d'une résine ou polymère en dispersion ayant une température de transition vitreuse (Tg) supérieure ou égale à 50°C, et b) d'au moins une résine polymère soluble dans l'eau issue d'une résine polymère insoluble dans l'eau et rendue soluble dans l'eau par neutralisation.

2. Composition d'encre selon la revendication 1, **caractérisée en ce qu'**elle comprend en outre un sel de conductivité.

3. Composition d'encre selon la revendication 1, **caractérisée en ce qu'**elle comprend un additif choisi parmi : un agent anti-mousse, un agent biocide, bactéricide ou fongicide, un stabilisant chimique, un stabilisant UV, pris seuls ou en combinaison.

4. Composition d'encre selon la revendication 1, **caractérisée en ce que** le colorant et/ou pigment est sous la forme d'une dispersion d'un ou de plusieurs pigments dans l'eau.

5. Composition d'encre selon la revendication 1, **caractérisée en ce qu'**elle comprend en outre un solvant organique.

6. Composition d'encre selon la revendication 1, **caractérisée en ce que** les polymères en dispersion ont des températures de transition Tg comprises entre -50°C et +100°C.

7. Composition d'encre selon la revendication 1, **caractérisée en ce que** les résines en dispersions sont choisies parmi les polymères et copolymères styréniques, acryliques et méthacryliques entre eux ou avec d'autres monomères éthyléniquement insaturés, les polymères et copolymères vinyliques, les polyesters, les polyuréthannes aromatiques et aliphatiques, les résines alkydes, les résines époxy.

8. Composition d'encre selon la revendication 1, **caractérisée en ce que** la résine polymère soluble dans l'eau est issue d'une résine polymère insoluble dans l'eau porteuse de fonctions carboxyles (résine solubilisable) et rendue soluble dans l'eau par neutralisation d'au moins une partie de ses groupes carboxyles.

9. Composition d'entre selon la revendication 1, **caractérisée en ce que** la résine solubilisable par neutralisation est choisie parmi les polymères et copolymères styréniques, acryliques et méthacryliques entre eux ou avec d'autres monomères éthyléniquement insaturés, les polyesters, les polymères et copolymères vinyliques, les polyuréthannes aromatiques et aliphatiques, les résines alkydes, les résines époxy, les polyoléfines chlorées, les silicones, la colophane et ses dérivés.

10. Composition d'encre selon la revendication 8, **caractérisée en ce que** la résine solubilisable a un indice d'acide compris entre 40 et 350.

11. Composition d'encre selon la revendication 8, **caractérisée en ce que** la résine solubilisable est rendue soluble dans l'eau par neutralisation avec une base choisie parmi l'ammoniaque, les amines primaires, secondaires et tertiaires.

12. Composition d'encre selon la revendication 2, **caractérisée en ce que** le sel de conductivité est choisi parmi les halogénures, les perchlorates, les nitrates, les thiocyanates, les acétates, les propionates, les sulfates de métaux alcalins ou alcalino-terreux ou d'ammonium simple ou quaternaire, pris seuls ou en mélanges.

13. Composition d'encre selon la revendication 3, **caractérisée en ce que** l'agent antimousse est choisi parmi les silicones, les polyols oxyacétyléniques, et les solvants organiques de haut point et ébullition pris seuls ou en mélanges.

14. Composition d'encre selon la revendication 3, **caractérisée en ce que** les agents biocide, bactéricide ou fongicide sont présents dans une quantité de 0,05 à 5 % en masse.

15. Composition d'encre selon la revendication 4, **caractérisée en ce que** le pigment en dispersion est un noir de carbone.

16. Composition selon la revendication 4, **caractérisée en ce que** le pigment en dispersion est un bleu de phtalocyanine.

17. Composition d'encre selon la revendication 5, **caractérisée en ce que** le solvant organique est choisi parmi les éthers de glycols et leurs esters.

18. Composition d'encre selon la revendication 1, **caractérisée en ce que** le rapport massique de la résine soluble aux résines en dispersion est compris entre 0,25 et 4.

19. Composition d'encre selon la revendication 5, **caractérisée en ce que** le solvant organique est présent dans une quantité n'excédant pas 5% en masse.

20. Composition d'encre selon la revendication 1, **caractérisée en ce qu'**elle comprend, les pourcentages étant des pourcentages en masse par rapport à la masse totale de la composition, de 0,1 à 30 % des résines polymères en dispersion, de 0,1 à 30 % de résine soluble, de 0,1 à 15 % de colorant et/ou de pigment et le complément à 100 % de solvant.

21. Composition d'encre selon la revendication 20, **caractérisée en ce que** la quantité de pigment et/ou de colorant est de 2 à 10% en masse.

22. Procédé de marquage d'objets par projection sur ces objets d'une encre, **caractérisée en ce que** l'encre projetée est une composition d'encre selon l'une quelconque des revendications 1 à 21.

23. Procédé selon la revendication 22, **caractérisé en ce que** le marquage est effectué par la technique du jet continu.

24. Substrat **caractérisé en ce qu'**il est pourvu d'un marquage obtenu par séchage de la composition d'encre selon l'une quelconque des revendications 1 à 21.

25. Substrat selon la revendication 24, **caractérisé en ce que** le substrat est du papier, du carton, de la matière plastique, de la céramique, du bois, du métal, ou tout autre matériau poreux ou non poreux.

## Patentansprüche

1. Tintenzusammensetzung zur Markierung von Gegenständen, die mindestens
- ein Bindemittel,
- ein Pigment und/oder ein Farbmittel,
- ein Lösemittel, das im wesentlichen Wasser umfasst, umfasst, **dadurch gekennzeichnet, dass** das Bindemittel die Kombination von a) einem dispergierten Bestandteil, der die Kombination von einem dispergierten Harz oder Polymer mit einer Einfriertemperatur (Tg) von unter 0°C und einem dispergierten Harz oder Polymer mit einer Einfriertemperatur (Tg) von größer als oder gleich 50 °C umfasst, und b) mindestens einem wasserlöslichen Polymerharz, das von einem wasserunlöslichen Polymerharz abgeleitet ist und durch Neutralisation wasserlöslich gemacht wurde, umfasst.

2. Tintenzusammensetzung gemäß Anspruch 1, **dadurch gekennzeichnet, dass** sie außerdem ein Leitfähigkeitssalz umfasst.

3. Tintenzusammensetzung gemäß Anspruch 1, **dadurch gekennzeichnet, dass** sie einen Zusatzstoff, der aus einem Entschäumungsmittel, einem bioziden, bakteriziden und fungiziden Mittel, einem chemischen Stabilisierungsmittel, einem UV-Stabilisierungsmittel ausgewählt ist, einzeln oder in Kombination umfasst.

4. Tintenzusammensetzung gemäß Anspruch 1, **dadurch gekennzeichnet, dass** das Farbmittel und/oder Pigment in der Form einer Dispersion von einem oder mehreren Pigmenten in Wasser vorliegt.

5. Tintenzusammensetzung gemäß Anspruch 1, **dadurch gekennzeichnet, dass** sie außerdem ein organisches Lösemittel umfasst.

6. Tintenzusammensetzung gemäß Anspruch 1, **dadurch gekennzeichnet, dass** die dispergierten Polymere Einfriertemperaturen Tg zwischen -50 °C und +100 °C besitzen.

7. Tintenzusammensetzung gemäß Anspruch 1, **dadurch gekennzeichnet, dass** die dispergierten Harze unter den Styrol-, Acryl- und Methacrylpolymeren und -copolymeren untereinander oder mit anderen ethylenisch ungesättigten Monomeren, den Vinylpolymeren und -copolymeren, den Polyestern, den aromatischen und aliphatischen Polyurethanen, den Alkydharzen, den Epoxyharzen ausgewählt sind.

8. Tintenzusammensetzung gemäß Anspruch 1, **dadurch gekennzeichnet, dass** das wasserlösliche Polymerharz von einem Carboxylfunktionen tragenden wasserunlöslichen Polymerharz (solubilisierbares Harz) abgeleitet ist und durch Neutralisation von mindestens einem Teil seiner Carboxylgruppen wasserlöslich gemacht wurde.

9. Tintenzusammensetzung gemäß Anspruch 1, **dadurch gekennzeichnet, dass** das durch Neutralisation solubilisierbare Harz aus den Styrol-, Acryl- und Methacrylpolymeren und -copolymeren untereinander oder mit anderen ethylenisch ungesättigten Monomeren, den Polyestern, den Vinylpolymeren und -copolymeren, den aromatischen und aliphatischen Polyurethanen, den Alkydharzen, den Epoxyharzen, den chlorierten Polyolefinen, den Siliconen, Kolophonium und dessen Derivaten ausgewählt ist.

10. Tintenzusammensetzung gemäß Anspruch 8, **dadurch gekennzeichnet, dass** das solubilisierbare Harz eine Säurezahl zwischen 40 und 350 aufweist.

11. Tintenzusammensetzung gemäß Anspruch 8, **dadurch gekennzeichnet, dass** das solubilisierbare Harz durch Neutralisation mit einer aus Ammoniak, den primären, sekundären und tertiären Aminen ausgewählten Base wasserlöslich gemacht wird.

12. Tintenzusammensetzung gemäß Anspruch 2, **dadurch gekennzeichnet, dass** das Leitfähigkeitssalz aus den Halogeniden, den Perchloraten, den Nitraten, den Thiocyanaten, den Acetaten, den Propionaten, den Sulfaten von Alkalimetallen oder Erdalkalimetallen oder einfachem oder quaternärem Ammonium, die einzeln oder in Gemischen verwendet werden, ausgewählt ist.

13. Tintenzusammensetzung gemäß Anspruch 3, **dadurch gekennzeichnet, dass** das Entschäumungsmittel aus den Siliconen, den Oxyacetylenpolyolen und den organischen Lösemitteln mit hohem Siedepunkt, die einzeln oder in Gemischen verwendet werden, ausgewählt ist.

14. Tintenzusammensetzung gemäß Anspruch 3, **dadurch gekennzeichnet, dass** die bioziden, bakteriziden oder fungiziden Mittel in einer Menge von 0,05 bis 5 Massen-% vorhanden sind.

15. Tintenzusammensetzung gemäß Anspruch 4, **dadurch gekennzeichnet, dass** das dispergierte Pigment Rußschwarz ist.

16. Zusammensetzung gemäß Anspruch 4, **dadurch gekennzeichnet, dass** das dispergierte Pigment Phthalocyaninblau ist.

17. Tintenzusammensetzung gemäß Anspruch 5, **dadurch gekennzeichnet, dass** das organische Lösemittel aus den Glykolethern und deren Estern ausgewählt ist.

18. Tintenzusammensetzung gemäß Anspruch 1, **dadurch gekennzeichnet, dass** das Massenverhältnis des löslichen Harzes zu den dispergierten Harzen zwischen 0,25 und 4 liegt.

19. Tintenzusammensetzung gemäß Anspruch 5, **dadurch gekennzeichnet, dass** das organische Lösemittel in einer Menge von nicht größer als 5 Massen-% vorhanden ist.

20. Tintenzusammensetzung gemäß Anspruch 1, **dadurch gekennzeichnet, dass** sie 0,1-30 % dispergierte Polymerharze, 0,1-30 % lösliches Harz, 0,1-15 % Farbmittel und/oder Pigment und zur Ergänzung auf 100 % Lösemittel umfasst, wobei die Prozentangaben Massen-% in Bezug auf die Gesamtmasse der Zusammensetzung sind.

21. Tintenzusammensetzung gemäß Anspruch 20, **dadurch gekennzeichnet, dass** die Menge des Pigments und/oder des Farbmittels 2-10 Massen-% beträgt.

22. Verfahren zur Markierung von Gegenständen durch Aufspritzen von Tinte auf diese Gegenstände, **dadurch gekennzeichnet, dass** die aufgespritzte Tinte eine Tintenzusammensetzung gemäß einem der Ansprüche 1 bis 21 ist.

23. Verfahren gemäß Anspruch 22, **dadurch gekennzeichnet, dass** die Markierung mittels der Technik eines fortlaufenden Strahls durchgeführt wird.

24. Substrat, **dadurch gekennzeichnet, dass** es mit einer Markierung versehen wird, die durch Trocknen der Tintenzusammensetzung gemäß einem der Ansprüche 1 bis 21 erhalten wird.

25. Substrat gemäß Anspruch 24, **dadurch gekennzeichnet, dass** das Substrat aus Papier, Karton, Kunststoff, Keramik, Holz, Metall oder einem anderen porenhaltigen oder nicht-porenhaltigen Material ist.

## Claims

1. Ink composition for marking objects incorporating at least:
- a binder,
- a pigment and/or a dye,
- a solvent essentially comprising water,
**characterized in that** the binder comprises the combination a) of a constituent in dispersion comprising the combination of a resin or polymer in dispersion having a glass transition temperature Tg lower than 0°C and a resin or polymer in dispersion having a glass transition temperature (Tg) equal to or above 50°C and b) at least one water-soluble polymer resin resulting from a water-insoluble polymer resin and made soluble in water by neutralization.

2. Ink composition according to claim 1, **characterized in that** it also comprises a conductivity salt.

3. Ink composition according to claim 1, **characterized in that** it comprises an additive chosen from among an antifoaming agent, a biocide, bactericide or fungicide, a chemical stabilizer, a UV stabilizer, considered singly or in combination.

4. Ink composition according to claim 1, **characterized in that** the dye and/or pigment is in the form of a dispersion of one or more pigments in water.

5. Ink composition according to claim 1, **characterized in that** it also comprises an organic solvent.

6. Ink composition according to claim 1, **characterized in that** the polymers in dispersion have glass transition temperatures Tg between -50 and +100°C.

7. Ink composition according to claim 1, **characterized in that** the resins in dispersion are chosen from among styrene, acrylic and methacrylic polymers and copolymers with one another or with other ethylenically unsaturated monomers, vinyl polymers and copolymers, polyesters, aromatic and aliphatic polyurethanes, alkide resins and epoxy resins.

8. Ink composition according to claim 1, **characterized in that** the water-soluble polymer resin results from a water-insoluble polymer resin carrying carboxyl functions (solubilizable resin) and made soluble in water by the neutralization of at least part of its carboxyl groups.

9. Ink composition according to claim 1, **characterized in that** the resin made soluble by neutralization is chosen from among styrene, acrylic and methacrylic polymers and copolymers with one another or with other ethylenically unsaturated monomers, polyesters, vinyl polymers and copolymers, aromatic and aliphatic polyurethanes, alkide resins, epoxy resins, chlorinated polyolefins, silicones, colophony and its derivatives.

10. Ink composition according to claim 8, **characterized in that** the solubilizable resin has an acid number between 40 and 350.

11. Ink composition according to claim 8, **characterized in that** the solubilizable resin is made soluble in water by neutralization with a base chosen from among ammonia, primary, secondary and tertiary amines.

12. Ink composition according to claim 2, **characterized in that** the conductivity salt is chosen from among halides, perchlorates, nitrates, thiocyanates, acetates, propionates, and sulphates of single or quaternary ammonium, alkaline earth or alkali metals, considered single or in combination.

13. Ink composition according to claim 3, **characterized in that** the antifoaming agent is chosen from among silicones, oxyacetylene polyols and high boiling point organic solvents considered singly or in combination.

14. Ink composition according to claim 3, **characterized in that** the biocide, bactericide or fungicide are present in a quantity of 0.05 to 5 wt.%.

15. Ink composition according to claim 4, **characterized in that** the pigment in dispersion is a carbon black.

16. Composition according to claim 4, **characterized in that** the pigment in dispersion is a phthalocyanine blue.

17. Ink composition according to claim 5, **characterized in that** the organic solvent is chosen from among glycol ethers and their esters.

18. Ink composition according to claim 1, **characterized in that** the weight ratio of the soluble resin to the resins in dispersion is between 0.25 and 4.

19. Ink composition according to claim 5, **characterized in that** the organic solvent is present in a quantity not exceeding 5 wt.%.

20. Ink composition according to claim 1, **characterized in that** it comprises, the percentages being weight percentages relative to the total weight of the composition, 0.1 to 30% polymer resins in dispersion, 0.1 to 30% soluble resin, 0.1 to 15% dye and/or pigment and the residue to 100% solvent.

21. Ink composition according to claim 20, **characterized in that** the pigment and/or dye quantity is 2 to 10 wt.%.

22. Process for marking objects by spraying an ink onto them, **characterized in that** the sprayed ink is an ink composition according to any one of the claims 1 to 21.

23. Process according to claim 22, **characterized in that** marking takes place by the continuous jet method.

24. Substrate, **characterized in that** it is provided with a marking obtained by drying the ink composition according to any one of the claims 1 to 21.

25. Substrate according to claim 24, **characterized in that** the substrate is paper, cardboard, plastic, ceramic, wood, metal, or any other porous or non porous material.
